(19) Europäisches Patentamt
European Patent Office
Office européen des brevets

(11) Publication number: 0 504 986 B1

(12) **EUROPEAN PATENT SPECIFICATION**

(45) Date of publication of patent specification: **19.07.95**

(51) Int. Cl.6: **C11D 1/83**, C11D 1/14, C11D 1/29, C11D 3/37

(21) Application number: **92200705.9**

(22) Date of filing: **11.03.92**

(54) **A liquid, aqueous concentrated alkylsulphate composition.**

(30) Priority: **19.03.91 GB 9105808**

(43) Date of publication of application:
**23.09.92 Bulletin 92/39**

(45) Publication of the grant of the patent:
**19.07.95 Bulletin 95/29**

(84) Designated Contracting States:
**BE DE ES FR GB IT NL PT**

(56) References cited:
**EP-A- 0 084 154**
**EP-A- 0 125 854**
**EP-A- 0 145 065**
**FR-A- 1 361 839**
**FR-A- 1 535 855**

(73) Proprietor: **SHELL INTERNATIONALE RESEARCH MAATSCHAPPIJ B.V.**
**Carel van Bylandtlaan 30**
**NL-2596 HR Den Haag (NL)**

(72) Inventor: **van Zon, Arie**
**Badhuisweg 3**
**NL-1031 CM Amsterdam (NL)**
Inventor: **Heywood, Frederick William**
**Stanlow 4,**
**Stanlow Refinery**
**Ellesmere Port,**
**South Wirral (GB)**
Inventor: **Broster, Phillip**
**Stanlow 4,**
**Stanlow Refinery**
**Ellesmere Port,**
**South Wirral (GB)**
Inventor: **van Grieken, Madelinde Gerarda Francisca Maria**
**Badhuisweg 3**
**NL-1031 CM Amsterdam (NL)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



Rank Xerox (UK) Business Services
(3.10/3.09/3.3.3)

## Description

The preparation of highly concentrated alkylsulphates, e.g. in a concentration of 50 to 80 per cent by weight of active material, represents a serious problem.

Alkylsulphates are known surfactants, which are now more preferred since they do not contain aromatic moieties.

There is a need for alkylsulphates to be used in heavy duty powder household detergent formulations. Alkylsulphates suffer, however, from the disadvantage that they are not readily available in a high concentration, needed for the preparation of washing powders by spray drying in an economic way. Soapers want a highly concentrated alkylsulphate.

The greatest difficulty with highly concentrated alkylsulphates is that their viscosity is too high so that they are more or less paste-like products, they are difficult to handle and not easily transportable.

Highly concentrated alkylsulphates have now been found which do not have these disadvantages.

The invention relates to a liquid, aqueous concentrated alkylsulphate composition comprising between 50 and 80 per cent by weight of active matter, the remaining amount being water, and 0.1 to 15 per cent by weight on active matter of a) an alcohol ethoxylate, b) an alcohol ethoxy sulphate, c) a polyethylene- or polypropylene glycol and d) the sulphated product of c), as a viscosity regulator.

In German Offenlegungsschrift 3151679 and European Patent Specification 24711 are disclosed surfactant formulations with a high concentration of active matter. The disclosures mention a number of tensides, but alkylsulphates with a high concentration of active matter (50 to 80 per cent by weight) are not disclosed. Both disclosures mention alkylsulphate with about 30 per cent by weight of active matter in the examples.

Alkylsulphates preferably have the chemical formula $R-O-SO_3M$, wherein R—O— is the rest of a non-aromatic alcohol, which may be linear or branched and saturated or unsaturated, which contains 6 to 24 carbon atoms and wherein M represents a cation of a soluble salt, preferably alkali metal, earth alkaline metal or ammonium $NH_4^+$. Most preferred are sodium and potassium.

The alkylsulphates may be prepared by reaction of a suitable alcohol with sulphur trioxide and neutralization of the reaction product. The alkylsulphates may also be prepared by reaction of the suitable alkene with sulphuric acid and neutralization.

The R—O-group may be considered to be derived from the corresponding alcohol ROH. Commercially available mixtures of primary monohydric alcohols are prepared via oligomerization of ethylene and the hydroformylation of the resulting higher olefins. Preferred alcohols include mixtures of $C_9$, $C_{10}$ and $C_{11}$ alkanols, mixtures of $C_{12}$ and $C_{13}$ alkanols, mixtures of $C_{12}$, $C_{13}$, $C_{14}$ and $C_{15}$ alkanols and mixtures of $C_{14}$ and $C_{15}$ alkanols. Many other commercial grades are suitable. Also very suitable are commercially available alkanols prepared by reduction of naturally occurring fatty esters. Of course also aliphatic alcohols, such as hexanol, heptanol, octanol, nonylalcohol and alcohols in the range of $C_{10}$ to $C_{24}$-monohydric alcohols are suitable, like 1-decanol, 1-undecanol, 1-dodecanol, 1-tetradecanol, 1-hexadecanol or 1-octadecanol.

Of the group of viscosity regulators the alcohol ethoxylates and the alcohol ethoxy sulphates may be built up from the same R—O-groups (alcoholic groups) as described above for alkylsulphates. The R—O-group is herein the rest of a non-aromatic alcohol, which may be linear or branched and saturated or unsaturated and R may contain from 6 to 24 carbon atoms. The alcohol ethoxylates preferably have the chemical formula

$$R-O-(C_2H_4O)_n-H,$$

wherein n is an integer from 1 to 100, preferably from 2 to 50, more preferably from 3 to 20. The alcohol ethoxy sulphates preferably have the chemical formula

$$R-O-(C_2H_4O)_n-SO_3M,$$

wherein n, R and M are as defined above.

The viscosity regulators may be polyethylene- and polypropylene glycols. They preferably have a molecular weight of from 200 to 10,000, more preferably from 400 to 4000.

The sulphated products from polyethylene- and polypropylene glycols comprise mono- or disulphated products. Preferred viscosity regulators are water-soluble salts of mono- and/or disulphates of the polyethylene glycols or of the polypropylene glycols. As preferred water-soluble salts are mentioned the alkali metal salts, the earth alkaline metal salts or the ammonium salts. Most preferred are the sodium salts of the mono- or disulphates.

The viscosity regulator is preferably present in the liquid aqueous concentrated alkylsulphate composition in an amount of 1 to 8 per cent by weight, more preferably 1 to 5 per cent by weight, calculated on the weight of the active matter in the composition.

Generally, the alkylsulphates of high concentrations are solid, wax-like products at 20 °C; at higher temperatures (50 °C) they become products with a viscosity of about 300.000 mPa.s (= 300 Pa.s = 300.000 centipoise) when practically no shear rates are exerted, e.g. 0.1 $s^{-1}$. They have a viscosity of about 8000 mPa.s at shear rates of about 100 $s^{-1}$. The alkylsulphates are non-newtonian liquids.

In order that the alkylsulphates be transported, they must be pumpable and they must not plug the pipes, taps or other means used in transport carriages. Therefore lowering the dynamic viscosity of about 8000 mPa.s to half that value or even less (2000 mPa.s) at 50 °C for the transportable alkylsulphate is desirable. All fluids possess a definite resistance to change of form and many solids show a gradual yielding to forces tending to change their form. This property is called viscosity, it is expressed in dyne seconds per square cm or poises, centipoises or pascal seconds. If the tangential force per unit area, exerted by a layer of fluid upon one adjacent is one dyne for a space rate of variation of the tangential velocity of unity, the viscosity is one poise (Perry). For non-newtonian liquids the viscosity diminishes with increasing rate of shear.

Example 1

The flow properties of Dobanol-45-sulphate containing a high active matter content together with various amounts of additives were investigated. (Dobanol is a trade mark, Dobanol-45 is a blend of $C_{14}$-alcohols and $C_{15}$-alcohols.)

In Table I are given the flow properties of Dobanol-45-sulphate containing 65 per cent by weight of active matter as a function of the weight amount additive Dobanol 25/9. (Dobanol 25/9 is a mixture of $C_{12}$ to $C_{15}$-alcohols which has been ethoxylated with an average of 9 mols ethylene oxide on one mol alcohol.) The experiments were carried out at temperatures of 50 °C and 65 °C. The weight amount of additive is calculated on weight of active matter.

Table I

| Dobanol 25/9 | 0 | 1.4 | 4.2 | 7 | 9.8 | 14 | 21 | 28 |
|---|---|---|---|---|---|---|---|---|
| t = 65 °C | - | nd | nd | nd | nd | ± | - | - |
| t = 50 °C | - | + | + | + | - | - | - | - |

nd = not determined
It was determined whether the product was:
+ = pourable
± = just pourable, or
- = not pourable.

Dobanol-45-sulphate with 65% by weight of active matter is not pourable at 50 °C and 65 °C, while 1 to 7 per cent by weight on active matter of the viscosity improver makes it pourable already at 50 °C.

In Table II are given the flow properties of Dobanol-45-sulphate containing different percentages of active matter, while Dobanol 25/9 was present in a concentration of 1.4 per cent by weight on active matter, at a temperature of 50 °C.

Table II

| % weight active matter | 60 | 65 | 70 | 75 | 80 |
|---|---|---|---|---|---|
| temp. 50 °C | - | + | ± | - | - |
| +, - and ± have the same significance as above. | | | | | |

In Table III are given the flow properties of Dobanol-45-sulphate containing 65% by weight of active matter together with various viscosity improvers:

Dobanol 91/10, a mixture of $C_{9-11}$-alcohols, which has been ethoxylated with an average of 10 mols ethylene oxide on one mol alcohol;

Dobanol 25/3, a mixture of $C_{12}$ to $C_{15}$-alcohols, which has been ethoxylated with an average of 3 mols ethylene oxide on one mol alcohol;

Dobanol 25/9;

polyethylene glycol having a mol weight of 400;

polyethylene glycol having a mol weight of 1000.

The amounts of viscosity improver are 1.4; 7 and 14 per cent by weight on active matter. Temperature 60 °C.

Table III

| additive % | Dobanol 91/10 | Dobanol 25/3 | Dobanol 25/9 | PEG 400 | PEG 1000 |
|---|---|---|---|---|---|
| 1.4 | ± (-) | + (+) | ** + (+) | ± (±) | + (+) |
| 7 | + (±) | + (+) | + (+) | + (+) | + (±) |
| 14 | ± (-) | - (-) | - (-) | ± (-) | ± (-) |
| The signs between brackets (+), (±) and (-) are the results obtained at a temperature of 50 °C. Of all the results presented in Table III those indicated with ** flow best. | | | | | |

Example 2

The flow properties of Dobanol-45-sulphate containing 70 per cent by weight of active matter together with various additives (per cent by weight on active matter) were investigated.

The Dobanol-45-sulphate, containing 70 per cent by weight of active matter comprises in addition to 27 per cent by weight of water, 2 per cent by weight of unreacted organic matter and 1 per cent by weight of inorganic sulphate.

In Table IV are given the dynamic viscosity vs different shear rates, namely 0.1; 1; 10; 50 and 100 $s^{-1}$ at 50 °C. Since the blend is a non-newtonian liquid the dynamic viscosity is also called apparent viscosity.

Table IV

| additive | (weight %) | viscosity in Pascal seconds at shear rates ($second^{-1}$) | | | | |
|---|---|---|---|---|---|---|
| | | 0.1 | 1 | 10 | 50 | 100 |
| PEG 400 sulphate | (2.1) | 300 | 25 | 5.0 | 2.0 | 2.5 |
| PEG 400 sulphate | (repeat) | 300 | 30 | 5.0 | 3.0 | 4.0 |
| PEG 400 sulphate | (4.2) | 230 | 30 | 7.0 | 3.5 | 2.0 |
| PEG 600 sulphate | (2.1) | 220 | 30 | 8.0 | 2.5 | 2.0 |
| PEG 200 | (7) | 450 | 32 | 10.0 | 4.0 | 3.0 |
| PEG 400 | (7) | 300 | 30 | 8.0 | 3.5 | 2.5 |
| PEG 600 | (7) | 400 | 25 | 10.0 | 4.5 | 3.0 |
| PEG 1000 | (7) | 300 | 40 | 10.0 | 4.5 | 3.5 |
| PEG 400 | (0.7) | 200 | 22 | 4.9 | 2.1 | 2.0 |
| PEG 400 | (1.4) | 200 | 20 | 5.0 | 1.7 | 1.3 |
| PEG 400 | (2.1) | 250 | 25 | 4.5 | 2.0 | 1.3 |
| PEG 400 | (2.8) | 500 | 50 | 6.4 | 2.7 | 2.2 |
| PEG 400 | (4.2) | 400 | 30 | 7.3 | 2.7 | 2.3 |
| PEG 400 | (5.6) | 300 | 20 | 7.9 | 3.3 | 2.7 |
| none | | 320 | 22 | 7.5 | 5.0 | 8.0 |
| PEG = polyethylene glycol | | | | | | |

The Table IV indicates that Dobanol-45-sulphate even at high shear rates has a rather high viscosity of 8.0 Pa.s (8000 mPa.s = 8000 centipoise), but that this can be dropped considerably by addition of polyethylene glycol or sulphate thereof.

**Claims**
**Claims for the following Contracting States : BE, DE, FR, GB, IT, NL, PT**

**1.** A liquid, aqueous concentrated alkylsulphate composition, comprising between 50 and 80 per cent by weight of active matter, the remainder being water, and 0.1 to 15 per cent by weight, calculated on active matter, of
a) an alcohol ethoxylate;
b) an alcohol ethoxysulphate;
c) a polyethylene- or polypropylene glycol; or
d) the sulphated product of c),
as a viscosity regulator.

**2.** A composition as claimed in claim 1, comprising between 60 and 75 per cent by weight of active matter.

**3.** A composition as claimed in claim 1 or 2, wherein the alkylsulphate has the chemical formula $R{-}O{-}SO_3M$, wherein R—O— is the rest of a non-aromatic alcohol, which may be linear or branched and saturated or unsaturated, which contains 6 to 24 carbon atoms and wherein M represents a cation of a soluble salt.

**4.** A composition as claimed in claim 3, wherein M represents an alkali, earth alkaline or ammonium cation.

**5.** A composition as claimed in any one of the claims 1 to 4, wherein in the alcohol ethoxylate of the formula

$$R{-}O{-}(C_2H_4O)_n{-}H$$

and in the alcohol ethoxysulphate of the formula

$$R-O-(C_2H_4O)_n-SO_3M,$$

the R—O-group is the rest of a non-aromatic alcohol, which may be linear or branched and saturated or unsaturated, which contains 6 to 24 carbon atoms and M represents an alkali, an earth alkaline or ammonium cation and n is an integer ranging from 1 to 100.

**6.** A composition as claimed in claim 5, wherein in the formulas n is an integer ranging from 2 to 50, preferably from 3 to 20.

**7.** A composition as claimed in any one of the claims 1-4, wherein the polyethylene glycol, the polypropylene glycol or their sulphated products have a molecular weight of from 200 to 6000.

**8.** A composition as claimed in any one of the preceding claims, wherein the amount of viscosity regulator is 1 to 8 per cent by weight on active matter.

**Claims for the following Contracting State : ES**

**1.** Process comprising preparing a liquid, aqueous concentrated alkylsulphate composition, comprising between 50 and 80 per cent by weight of active matter, the remainder being water, and 0.1 to 15 per cent by weight, calculated on active matter, of

a) an alcohol ethoxylate;
b) an alcohol ethoxysulphate;
c) a polyethylene- or polypropylene glycol; or
d) the sulphated product of c),

as a viscosity regulator which process comprises adding these compounds together.

**2.** A process as claimed in claim 1, comprising preparing a composition comprising between 60 and 75 per cent by weight of active matter.

**3.** A process as claimed in claim 1 or 2, wherein the alkylsulphate has the chemical formula $R-O-SO_3M$, wherein R—O— is the rest of a non-aromatic alcohol, which may be linear or branched and saturated or unsaturated, which contains 6 to 24 carbon atoms and wherein M represents a cation of a soluble salt.

**4.** A process as claimed in claim 3, wherein M represents an alkali, earth alkaline or ammonium cation.

**5.** A process as claimed in any one of the claims 1 to 4, wherein in the alcohol ethoxylate of the formula

$$R-O-(C_2H_4O)_n-H$$

and in the alcohol ethoxysulphate of the formula

$$R-O-(C_2H_4O)_n-SO_3M,$$

the R--O-group is the rest of a non-aromatic alcohol, which may be linear or branched and saturated or unsaturated, which contains 6 to 24 carbon atoms and M represents an alkali, an earth alkaline or ammonium cation and n is an integer ranging from 1 to 100.

**6.** A process as claimed in claim 5, wherein in the formulas n is an integer ranging from 2 to 50, preferably from 3 to 20.

**7.** A process as claimed in any one of the claims 1-4, wherein the polyethylene glycol, the polypropylene glycol or their sulphated products have a molecular weight of from 200 to 6000.

**8.** A process as claimed in any one of the preceding claims, wherein the amount of viscosity regulator is 1 to 8 per cent by weight on active matter.

**Patentansprüche**
**Patentansprüche für folgende Vertragsstaaten : BE, DE, FR, GB, IT, NL, PT**

1. Flüssige, wäßrige konzentrierte Alkylsulfatzusammensetzung, die 50 bis 80 Gew.-% Wirkstoff, wobei der Rest Wasser ist, und als Viskositätsregler, bezogen auf den Wirkstoff, 0,1 bis 15 Gew.-%
   a) eines Alkoholethoxylats,
   b) eines Alkoholethoxysulfats,
   c) eines Polyethylen- oder Polypropylenglykols oder
   d) des sulfatierten Produkts von c) enthält.

2. Zusammensetzung nach Anspruch 1, enthaltend 60 bis 75 Gew.-% Wirkstoff.

3. Zusammensetzung nach Anspruch 1 oder 2, wobei das Alkylsulfat die chemische Formel $R\text{-}O\text{-}SO_3M$ besitzt, worin R-O- den Rest eines nichtaromatischen Alkohols bedeutet, der linear oder verzweigt, gesättigt oder ungesättigt sein kann und 6 bis 24 Kohlenstoffatome aufweist, und wobei M ein Kation eines löslichen Salzes darstellt.

4. Zusammensetzung nach Anspruch 3, wobei M ein Alkali-, Erdalkali- oder Ammoniumkation darstellt.

5. Zusammensetzung nach einem der Ansprüche von 1 bis 4, wobei im Alkoholethoxylat der Formel $R\text{-}O\text{-}(C_2H_4O)_n\text{-}H$ und im Alkoholethoxysulfat der Formel $R\text{-}O\text{-}(C_2H_4O)_n\text{-}SO_3M$ die R-O-Gruppe den Rest eines nichtaromatischen Alkohols bedeutet, der linear oder verzweigt, gesättigt oder ungesättigt sein kann und 6 bis 24 Kohlenstoffatome aufweist, und M ein Alkali-, Erdalkali- oder Ammoniumkation und n eine ganze Zahl zwischen 1 und 100 darstellen.

6. Zusammensetzung nach Anspruch 5, wobei in den Formeln n eine ganze Zahl zwischen 2 und 50, vorzugsweise zwischen 3 und 20 ist.

7. Zusammensetzung nach einem der Ansprüche von 1-4, wobei das Polyethylenglykol, das Polypropylenglykol oder deren sulfatierte Produkte ein Molekulargewicht von 200 bis 6000 besitzen.

8. Zusammensetzung nach einem der vorangehenden Ansprüche, wobei die Menge an Viskositätsregler 1 bis 8 Gew.-%, bezogen auf den Wirkstoff, beträgt.

**Patenansprüche für folgenden Vertragsstaat : ES**

1. Verfahren, bei dem man eine flüssige, wäßrige konzentrierte Alkylsulfatzusammensetzung herstellt, die zwischen 50 und 80 Gew.-% Wirkstoff, wobei der Rest Wasser ist, und als Viskositätsregler, bezogen auf den Wirkstoff, 0,1 bis 15 Gew.-%
   a) eines Alkoholethoxylats,
   b) eines Alkoholethoxysulfats,
   c) eines Polyethylen- oder Polypropylenglykols oder
   d) des sulfatierten Produkts von c) enthält,

   wobei man diese Verbindungen zusammengibt.

2. Verfahren nach Anspruch 1, bei dem man eine Zusammensetzung herstellt, die 60 bis 75 Gew.-% Wirkstoff enthält.

3. Verfahren nach Anspruch 1 oder 2, wobei das Alkylsulfat die chemische Formel $R\text{-}O\text{-}SO_3M$ besitzt, worin R-O- den Rest eines nichtaromatischen Alkohols bedeutet, der linear oder verzweigt, gesättigt oder ungesättigt sein kann und 6 bis 24 Kohlenstoffatome aufweist, und worin M ein Kation eines löslichen Salzes darstellt.

4. Verfahren nach Anspruch 3, wobei M ein Alkali-, Erdalkali- oder Anmoniumkation darstellt.

5. Verfahren nach einem der Ansprüche 1 bis 4, wobei im Alkoholethoxylat der Formel $R\text{-}O\text{-}(C_2H_4O)_n\text{-}H$ und im Alkoholethoxysulfat der Formel $R\text{-}O\text{-}(C_2H_4O)_n\text{-}SO_3M$ die R-O-Gruppe den Rest eines nichtaromatischen Alkohols bedeutet, der linear oder verzweigt, gesättigt oder ungesättigt sein kann und 6 bis

24 Kohlenstoffatome aufweist, und M ein Alkali-, Erdalkali- oder Ammoniumkation und n eine ganze Zahl zwischen 1 und 100 darstellen.

**6.** Verfahren nach Anspruch 5, wobei in den Formeln n eine ganze Zahl zwischen 2 und 50, vorzugsweise zwischen 3 und 20 ist.

**7.** Verfahren nach einem der Ansprüche 1-4, wobei das Polyethylenglykol, das Polypropylenglykol oder deren sulfatierte Produkte ein Molekulargewicht von 200 bis 6000 besitzen.

**8.** Verfahren nach einem der vorangehenden Ansprüche, wobei die Menge an Viskositätsregler 1 bis 8 Gew.-%, bezogen auf den Wirkstoff, beträgt.

**Revendications**
**Revendications pour les Etats contractants suivants : BE, DE, FR, GB, IT, NL, PT**

**1.** Une composition liquide aqueuse concentrée d'alcoylsulfate, comprenant entre 50 et 80 pour cent en poids de matière active, le complément étant de l'eau, et une quantité de 0,1 à 15 pour cent en poids, par rapport à la matière active, de
a) un éthoxylate d'alcool ;
b) un éthoxysulfate d'alcool ;
c) un polyéthylène ou polypropylène glycol ; ou
d) le produit sulfaté de c),
comme régulateur de viscosité.

**2.** Une composition selon la revendication 1, comprenant entre 60 et 75 pour cent en poids de matière active.

**3.** Une composition selon la revendication 1 ou 2, dans laquelle l'alcoylsulfate a la formule chimique R-O-$SO_3M$, dans laquelle R-O- est le reste d'un alcool non-aromatique, qui peut être linéaire ou ramifié et saturé ou insaturé, qui contient 6 à 24 atomes de carbone et M représente un cation d'un sel soluble.

**4.** Une composition selon la revendication 3, où M représente un cation de métal alcalin, de métal alcalinoterreux ou d'ammonium.

**5.** Une composition selon l'une quelconque des revendications 1 à 4, où dans l'éthoxylate d'alcool de la formule

$$R{-}O{-}C{-}(C_2H_4O)_n{-}H$$

et dans l'éthoxysulfate d'alcool de la formule

$$R{-}O{-}(C_2H_4O{-})_n{-}SO_3M,$$

le groupe R-O est le reste d'un alcool non-aromatique, qui peut être linéaire ou ramifié et saturé ou insaturé, qui contient 6 à 24 atomes de carbone, et M représente un cation de métal alcalin, de métal alcalino-terreux ou d'ammonium et n est un nombre entier de 1 à 100.

**6.** Une composition selon la revendication 5, où dans les formules n est un nombre entier de 2 à 50, de préférence de 3 à 20.

**7.** Une composition selon l'une quelconque des revendications 1-4, où le polyéthylène glycol, le polypropylène glycol ou leurs produits sulfatés ont un poids moléculaire de 200 à 6000.

**8.** Une composition selon l'une quelconque des revendications précédentes, dans laquelle la quantité de régulateur de viscosité est de 1 à 8 pour cent en poids par rapport à la matière active.

**Revendications pour l'Etat contractant suivant : ES**

1. Procédé comprenant la préparation d'une composition liquide aqueuse concentrée d'alcoylsulfate, comprenant entre 50 et 80 pour cent en poids de matière active, le complément étant de l'eau, et une quantité de 0,1 à 15 pour cent en poids, par rapport à la matière active, de
   a) un éthoxylate d'alcool ;
   b) un éthoxysulfate d'alcool ;
   c) un polyéthylène ou polypropylène glycol ; ou
   d) le produit sulfaté de c),

   comme régulateur de viscosité, lequel procédé comprend l'addition de ces composés les uns aux autres.

2. Un procédé selon la revendication 1, comprenant la préparation d'un composition comprenant entre 60 et 75 pour cent en poids de matière active.

3. Un procédé selon la revendication 1 ou 2, dans lequel l'alcoylsulfate a la formule chimique $R\text{-}O\text{-}SO_3M$, dans laquelle R-O- est le reste d'un alcool non aromatique, qui peut être linéaire ou ramifié et saturé ou insaturé, qui contient 6 à 24 atomes de carbone, et M représente un cation d'un sel soluble.

4. Un procédé selon la revendication 3, dans lequel M représente un cation de métal alcalin, de métal alcalino-terreux ou d'ammonium.

5. Un procédé selon l'une quelconque des revendications 1 à 4, dans lequel dans l'éthoxylate d'alcool de la formule

   $$R\text{-}O\text{-}(C_2H_4O)_n\text{-}H$$

   et dans l'éthoxysulfate d'alcool de la formule

   $$r\text{-}O\text{-}(C_2H_4O)_n\text{-}SO_3M,$$

   le groupe R-O- est le reste d'un alcool non-aromatique, qui peut être linéaire ou ramifié et saturé ou insaturé, qui contient 6 à 24 atomes de carbone, M représente un cation de métal alcalin, de métal alcalino-terreux ou d'ammonium et n est un nombre entier de 1 à 100.

6. Un procédé selon la revendication 5, dans lequel dans les formules n est un nombre entier de 2 à 50, de préférence de 3 à 20.

7. Un procédé Selon l'une quelconque des revendications 1-4, dans lequel le polyéthylène glycol, le polypropylène glycol ou leurs produits sulfatés ont un poids moléculaire de 200 à 6000.

8. Un procédé selon l'une quelconque des revendications précédentes, dans lequel la quantité de régulateur de viscosité est de 1 à 8 pour cent en poids par rapport à la matière active.